# EUROPÄISCHE PATENTANMELDUNG

(11) **EP 2 581 820 A1**
(43) Veröffentlichungstag der Anmeldung: **17.04.2013**
(21) Anmeldenummer: 11184520.2
(22) Anmeldetag: 10.10.2011
(51) Int. Cl.: G06F 3/06

(54) **Verteilte Datenspeicherung**

(71) Anmelder: Atos IT Solutions and Services GmbH, 81739 München (DE)
(72) Erfinder: Scharinger, Boris, 90762 Fürth (DE)
(74) Vertreter: Patentanwaltskanzlei WILHELM & BECK

(57) **Zusammenfassung**

Ein Speichersystem umfasst eine erste Schnittstelle zur Entgegennahme von zu speichernden Daten, eine zweite Schnittstelle zur Verbindung mit mehreren Datenspeichern, die sich an unterschiedlichen geographischen Orten befinden, und eine Verarbeitungseinrichtung, die dazu eingerichtet ist, einen der Datenspeicher für die entgegen genommenen Daten auszuwählen und die Daten an den ausgewählten Datenspeicher zu versenden. Dabei erfolgt die Auswahl auf der Basis des Datentyps der Daten und eines geographischen Orts des Datenspeichers erfolgt.

## Beschreibung

Die Erfindung betrifft ein Speichersystem, ein Speicherverfahren und ein Computerprogrammprodukt zur Durchführung des Speicherverfahrens nach den unabhängigen Ansprüchen. Insbesondere betrifft die Erfindung eine Technik zur Speicherung von Daten an unterschiedlichen geographischen Speicherorten.

Um große Datenmengen abspeichern zu können und die gespeicherten Daten an mehreren Orten zur Verfügung stellen zu können, ist es bekannt, verteilte Datenzentren zu verwenden. Ein solches Datenzentrum verfügt über mehrere Datenspeicher an verschiedenen geographischen Orten, die über eine einheitliche Schnittstelle ansprechbar sind. Das Speichern und das Abrufen von Daten aus derartigen Datenspeichern erfolgt üblicherweise vollständig transparent, das heißt, dass der geographische Ort, an dem die zu speichernden Daten abgelegt werden, einem Benutzer beziehungsweise einer speichernden Applikation unbekannt und üblicherweise auch nicht veränderbar ist.

Eine Variante einer derartigen Datenspeicherung ist unter der Bezeichnung "Cloud Storage" bekannt. Dabei wird eine Vielzahl von Datenspeichern und gegebenenfalls auch Computern mittels eines Datennetzes, beispielsweise des Internets, miteinander verbunden und die Datenspeicherung erfolgt dezentral. Mithilfe dieser Technik kann eine Auslastung des Datenzentrums bezüglich abgespeichertem Datenvolumen und Kommunikationsaufwand über eine große Anzahl von Datenspeichern beziehungsweise Computern verteilt werden.

Obwohl diese verteilte Datenspeicherung Vorzüge hat, wird sie für eine Vielzahl von Daten noch nicht verwendet. Dies liegt darin begründet, dass je nachdem, in welchem Land ein Datenspeicher sich geographisch befindet, unterschiedliche gesetzliche Regelungen bestehen, welche den Verbleib und die Sicherheit der Daten betreffen können. Beispielsweise kann ein Zugriff von dritter Seite auf die gespeicherten Daten in unterschiedlichen Ländern unterschiedlich hohen Anforderungen unterliegen. Vertrauliche Daten sollten nicht auf einem Datenspeicher abgespeichert werden, der in einem Land steht, in dem ein Zugriff von dritter Seite relativ leicht juristisch erwirkt werden kann.

Darüber hinaus existieren Exportbeschränkungen für bestimmte Technologien, die die Daten betreffen können. Klassifizierte Daten dürfen nicht auf einem Datenspeicher abgespeichert werden, der sich in einem Land befindet, welches als unsicher eingestuft ist. Die Daten können auch beispielsweise Abrechnungsdaten sein, wobei Richtlinien für die Speicherung von Abrechnungsdaten existieren, die eine Speicherung solcher Daten in einem als unsicher angesehenen Land nicht zulassen.

Es ist Aufgabe der vorliegenden Erfindung, die Vorteile des "Cloud Storage" auch für Daten zu nutzen, die aufgrund ihrer Sensitivität bislang nicht in transparenten, verteilten Speichersystemen abgespeichert werden konnten.

Die Erfindung löst diese Aufgabe mittels eines Speichersystems mit den Merkmalen von Anspruch 1, eines Speicherverfahren mit den Merkmalen von Anspruch 8 und eines Computerprogrammprodukts mit den Merkmalen von Anspruch 12. Unteransprüche geben bevorzugte Ausführungsformen wieder.

### Offenbarung der Erfindung

Ein erfindungsgemäßes Speichersystem umfasst eine erste Schnittstelle zur Entgegennahme von zu speichernden Daten, eine zweite Schnittstelle zur Verbindung mit mehreren Datenspeichern, die sich an unterschiedlichen geographischen Orten befinden, und eine Verarbeitungseinrichtung, die dazu eingerichtet ist, einen der Datenspeicher für die entgegengenommenen Daten auszuwählen und die Daten an den ausgewählten Datenspeicher zu versenden. Dabei erfolgt die Auswahl auf der Basis des Datentyps und eines geographischen Orts des Datenspeichers.

Dadurch wird es möglich, den Inhalt beziehungsweise die Bedeutung der zu speichernden Daten mit dem geographischen Speicherort in Beziehung zu setzen, um zu vermeiden, dass die Daten nach dem Abspeichern aufgrund des Speicherorts gefährdet werden könnten. Auch sensible Daten beziehungsweise Daten, für die legale Vorgaben bestehen, können auf diese Weise in einer "Storage Cloud" abgespeichert werden, wodurch die Daten mit geringen Kosten auf eine potentiell große Anzahl von Datenspeichern verteilt werden können. Die Daten können dadurch von unterschiedlichen Orten aus schneller und mit größerer Bandbreite erreichbar sein. Darüber hinaus kann das Konzept von Sicherheitskopien der gespeicherten Daten dadurch vereinfacht werden. Die Daten können daher auch im Fall eines lokalen Desasters, etwa eines Brandes oder eines Wasserschadens, zugreifbar bleiben.

In einer Ausführungsform erfolgt die Zuordnung der Daten auf den Datenspeicher auf der Basis von Regeln, die einen Datentyp einem geographischen Ort des Datenspeichers zuordnen. Eine Steuerung, welche Daten letztlich an welchen Orten abgelegt werden dürfen, kann so vereinfacht sein.

Die Zuordnung kann auch auf der Basis von Regeln erfolgen, die einen geographischen Mindestabstand angeben, den zwei Datenspeichern einzuhalten haben, die der Speicherung von Daten unterschiedlicher vorbestimmter Datentypen zugeordnet sind. Auf diese Weise lässt sich ein Risiko beispielsweise eines Datenangriffs oder eines Desasters streuen. Dadurch kann es vermieden werden, dass beispielsweise personenbezogene Informationen und abrechnungsbezogene Informationen auf dem gleichen Datenspeicher abgelegt werden. Sollte eine dritte Seite Zugriff auf einen der Datenspeicher erhalten, so sind ihr die kombinierten Daten noch nicht bekannt, was dazu beitragen kann, einen Folgeschaden durch Verwendung der Daten durch die dritte Seite zu begrenzen.

In einer bevorzugten Ausführungsform umfasst das Speichersystem ein Verzeichnis mit einer Zuordnung von Datenspeichern zu deren geographischen Orten. Auf diese Weise kann schnell und sicher entschieden werden, welcher Datenspeicher zur Speicherung von Daten eines vorbestimmten Datentyps infrage kommt und welcher nicht. Gegebenenfalls kann auch eine Bestimmung eines geographischen Abstands zwischen mehreren Datenspeichern durch das Verzeichnis erleichtert sein.

In einer weiter bevorzugten Ausführungsform sind mehrere Datenspeicher in einer Gruppe zusammengefasst und der geographische Ort der Gruppe ist durch ein Gebiet gegeben, das die geographischen Orte aller Datenspeicher der Gruppe umfasst. So können die Datenspeicher der Gruppe als ein Datenspeicher behandelt werden. Umfasst die Gruppe beispielsweise Datenspeicher in mehreren Ländern, von denen eines als vertrauenswürdig und ein anderes als nicht vertrauenswürdig gilt, so kann davon ausgegangen werden, dass alle Datenspeicher der Gruppe auf einem nicht vertrauenswürdigen Territorium stehen.

In einer weiteren Ausführungsform kann die Auswahl zusätzlich auf der Basis von Regeln erfolgen, die den Verlauf einer Datenverbindung zum Datenspeicher berücksichtigen. Verläuft die Datenverbindung zu einem Datenspeicher an einem als vertrauenswürdig eingestuften Ort durch ein Gebiet, das als nicht vertrauenswürdig eingestuft ist, so kann die Speicherung von Daten auf diesem Datenspeicher abgelehnt werden.

In einer besonders bevorzugten Ausführungsform ist der geographische Ort eines Datenspeichers durch sein Aufstellungsland gegeben. Dadurch können insbesondere legislative Vorgaben bezüglich des Speicherorts erfüllt werden.

Ein erfindungsgemäßes Speicherverfahren umfasst Schritte des Entgegennehmens von zu speichernden Daten, des Auswählens eines Datenspeichers für die entgegengenommenen Daten auf der Basis eines Datentyps der Daten und eines geographischen Orts des Datenspeichers, und des Versendens der Daten an den ausgewählten Datenspeicher.

Das Verfahren kann insbesondere in einem bestehenden Computer- beziehungsweise Kommunikationsnetz angewandt werden, welches Daten zur Speicherung auf unterschiedliche Datenspeicher verteilt. Ein existierendes Speichersystem kann auf diese Weise nachgerüstet werden, um auch solche Daten verteilt abzulegen, deren Speicherorte an vorbestimmte Regeln gebunden sind.

In einer bevorzugten Ausführungsform umfasst das Verfahren ferner den Schritt des Bestimmens des Datentyps auf der Basis der entgegengenommenen Daten. Eine derartige Analyse der Daten kann eine verbesserte Beurteilung der zu applizierenden Regeln erlauben.

Das Verfahren kann außerdem Schritte des Bestimmens eines geographischen Abstands zwischen dem ausgewählten Datenspeicher und einem Datenspeicher, der der Speicherung von Daten eines anderen Datentyps zugeordnet ist, und, falls der bestimmte Abstand geringer als ein vorbestimmter Abstand ist, des Zurückweisens des Speicherns der Daten auf dem ausgewählten Datenspeicher bzw. des Auswählens eines anderen Datenspeichers umfassen.

Dadurch kann die Auswahl des Datenspeichers so getroffen werden, dass Daten unterschiedlicher, vorbestimmter Datentypen nicht nur auf unterschiedlichen Datenspeichern gespeichert werden, sondern dass diese Datenspeicher auch auf unterschiedlichen Territorien liegen und daher unterschiedliche Vertrauensgrade genießen.

Falls der Datentyp der Daten auf automatische Weise nicht ausreichend bestimmbar ist, kann das Bestimmen des Datentyps der entgegengenommenen Daten auf der Basis einer Benutzereingabe erfolgen. Die Benutzereingabe kann dazu beitragen, einen Vertraulichkeitsgrad der Daten zu bestimmen, wenn die automatische Analyse der Daten fehlschlägt.

Nach einem dritten Aspekt umfasst ein Computerprogrammprodukt Programmcodemittel zur Durchführung des beschriebenen Speicherverfahrens, wenn das Computerprogrammprodukt auf einer Verarbeitungseinrichtung ausgeführt wird oder auf einem computerlesbaren Datenträger abgespeichert ist.

### Kurze Beschreibung der Figuren

Die Erfindung wird nun mit Bezug auf die beigefügten Figuren genauer beschrieben, in denen:
- Figur 1: ein Speichersystem;
- Figur 2: eine Darstellung von Datenspeichern, die an unterschiedlichen Orten aufgestellt sind; und
- Figur 3: ein Ablaufdiagramm eines Verfahrens zum Speichern von Daten
darstellt.

### Genaue Beschreibung von Ausführungsbeispielen

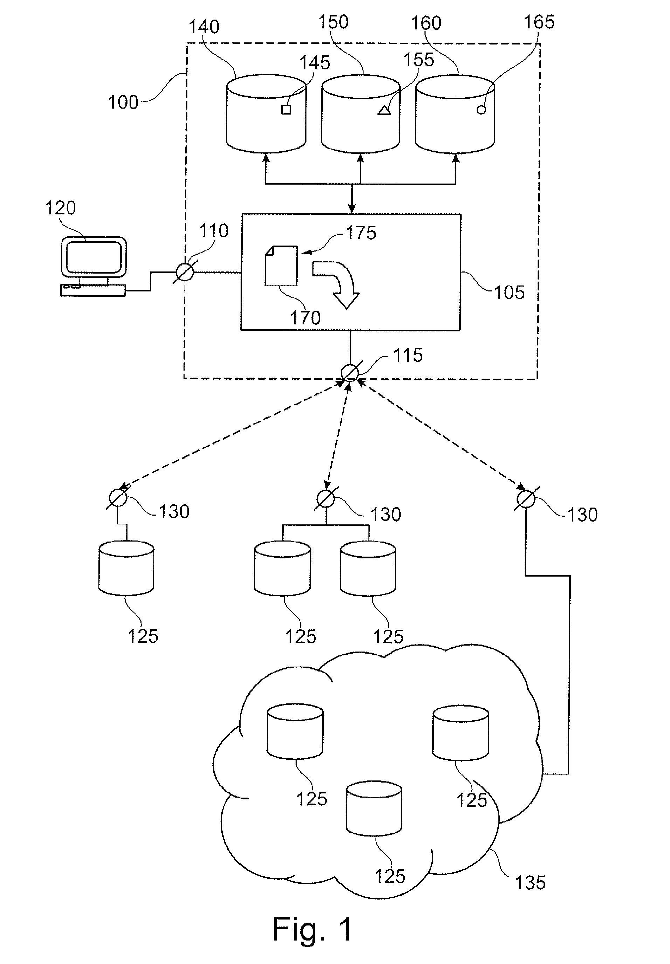

Figur 1 zeigt ein Speichersystem 100 zum Abspeichern von Daten. Obwohl in der vorliegenden Beschreibung vorwiegend Bezug genommen wird auf das reine Abspeichern von Daten, ist die Möglichkeit des Abrufens der gespeicherten Daten in entsprechender Weise implizit umfasst.

Das Speichersystem 100 umfasst eine Verarbeitungseinrichtung 105, eine erste Schnittstelle 110 und eine zweite Schnittstelle 115. Jede der beiden Schnittstellen 110, 115 kann als physikalische Schnittstelle ausgebildet sein, beispielsweise in Form einer Ethernet-, USB-, Firewire- oder Lichtleiter-Schnittstelle. Jede der Schnittstellen 110, 115 kann auch als logische Schnittstelle ausgebildet sein, beispielsweise in Form eines Programm- oder Prozeduraufrufs, etwa als Anwenderprogramm-Schnittstelle (API) eines Betriebssystems.

Die erste Schnittstelle 110 ist zum Austausch von Daten, insbesondere zur Entgegennahme von Daten, ausgebildet. Solche Daten können beispielsweise von dem dargestellten Rechner 120 eines Anwenders stammen. Selbstverständlich können auch mehrere Rechner 120, gegebenenfalls unter Hinzunahme von Netzwerk-Komponenten, mit der ersten Schnittstelle 110 verbunden sein, um den Datenzugriff mittels des Speichersystems 100 einer Vielzahl von Rechnern 120 zur Verfügung zu stellen.

Die zweite Schnittstelle 115 ist zur Verbindung mit mehreren unterschiedlichen Datenspeichern 125 eingerichtet. Jeder Datenspeicher 125 ist über eine dritte Schnittstelle 130 ansprechbar, die mit der zweiten Schnittstelle 115 des Speichersystems 100 verbunden ist. Die Verbindung zwischen der zweiten Schnittstelle 115 und den dritten Schnittstellen 130 erfolgt üblicherweise über ein Weitverkehrsnetz, beispielsweise über das Internet oder ein privates Netz.

Über jede der dritten Schnittstellen 130 können einer oder mehrere Datenspeicher 125 ansprechbar sein. Die links dargestellte dritte Schnittstelle 130 ist mit einem einzelnen Datenspeicher 125 verbunden, während die mittlere dargestellte dritte Schnittstelle 130 mit einer Gruppe von Datenspeichern 125 verbunden ist, die im Wesentlichen am gleichen Ort aufgestellt sind, beispielsweise im gleichen Rechenzentrum.

Die rechts dargestellte Schnittstelle 130 ist mit einer Gruppe 135 von Datenspeichern 125 verbunden, die in einer so genannten Wolke ("Cloud") organisiert sind. Der Zweck der Wolke ist es ist, die physikalischen Eigenschaften der Datenspeicher 125, beispielsweise ihre geographischen Orte, nach außen nicht sichtbar zu machen, so dass über die rechte dritte Schnittstelle 130 ein Speicherdienst angeboten werden kann, dessen interne Organisation im Wesentlichen verdeckt ist. Im Folgenden wird die Gruppe 135 daher wie ein einziger Datenspeicher 125 behandelt.

Das Speichersystem 100 umfasst ferner einen ersten Datenspeicher 140 zur Aufnahme von Regeln 145, einen zweiten Datenspeicher 150, im folgenden auch Verzeichnis genannt, zur Aufnahme von Verzeichniseinträgen 155, sowie einen dritten Datenspeicher 160 zur Aufnahme von Zuordnungen 165. Jeder der Datenspeicher 140, 150, 160 kann auch mit einem der anderen Datenspeicher 140, 150, 160 oder in einer Ausführungslogik der Verarbeitungseinrichtung 105 integriert ausgeführt sein. Der dritte Datenspeicher 160 und die in ihm aufgenommenen Zuordnungen 165 sind für die Abspeicherung von Daten nicht unbedingt erforderlich.

Die Regeln 145 und die Verzeichniseinträge 155 werden von der Verarbeitungseinrichtung 105 benutzt, um Daten, die sie mittels der ersten Schnittstelle 110 empfangen hat, einem der Datenspeicher 125 zuzuordnen. Dieser Vorgang soll kurz an einem Beispiel ausgeführt werden.

Über die erste Schnittstelle 110 empfängt die Verarbeitungseinrichtung 105 des Speichersystems 100 eine abzuspeichernde Datei 170. Die Datei 170 enthält Daten eines Datentyps 175. Der Datentyp 175 kann sich beispielsweise auf ein Datenformat der Datei 170 beziehen, so dass beispielsweise unterschiedliche Textdateien, Kalkulationstabellen oder Zeichenobjekte anhand des Datentyps 175 identifiziert werden können. Der Datentyp 175 kann jedoch auch noch weitere Informationen über die Daten in der Datei 170 enthalten. Solche weitergehenden Informationen können beispielsweise ein zugeordnetes Projekt, einen Bearbeiter oder eine Vertraulichkeitsstufe umfassen.

Die Regeln 145 im ersten Datenspeicher 140 geben an, welcher Datentyp 175 für welchen Datenspeicher 125 infrage kommt. Eine Regel 145 kann positiv ausgedrückt sein, indem ein bestimmter Datenspeicher 125 beziehungsweise eine Gruppe 135 von Datenspeichern 125 einem Datentyp 175 zugeordnet ist. Die Regel 145 kann auch negativ ausgedrückt sein, indem ein bestimmter Datenspeicher 125 beziehungsweise eine Gruppe 135 von Datenspeichern 125 zur Speicherung von Daten eines Datentyps 175 gesperrt ist.

In einer bevorzugten Ausführungsform beziehen sich die Regeln 145 im ersten Datenspeicher 140 jedoch nicht unmittelbar auf die Datenspeicher 125 beziehungsweise Gruppen 135 von Datenspeichern 125, sondern auf geographische Orte, an denen die Datenspeicher 125 bzw. die Gruppe 135 jeweils angeordnet sind. Eine Zuordnung der einzelnen Datenspeicher 125 zu geographischen Orten erfolgt über Verzeichniseinträge 155 im zweiten Datenspeicher 150.

Der in einer Regel 145 vermerkte geographische Ort, an dem die Datei 170 mit dem Datentyp 175 gespeichert werden darf oder nicht gespeichert werden darf, bezieht sich vorzugsweise auf ein vorbestimmtes Gebiet, beispielsweise einen Kontinent, ein Land oder einen Staat, während der Verzeichniseintrag 155 eines Datenspeichers 125 angibt, auf welchem Kontinent, in welchem Land oder Staat sich der betroffene Datenspeicher 125 befindet. So kann die Verarbeitungseinrichtung 105 entscheiden, ob ein bestimmter Datenspeicher 125 zur Speicherung der Datei 170 infrage kommt oder nicht. Umgekehrt kann die Verarbeitungseinrichtung 105 aus den ihr bekannten Datenspeichern 125 einen auswählen, der eine beziehungsweise alle Regeln 145 des ersten Datenspeichers 140 erfüllt.

Die Gruppe 135 von Datenspeichern 125 wird in diesem Sinn als ein einziger Datenspeicher 125 behandelt, dessen geographischer Aufstellungsort ein Gebiet umfasst, das die geographischen Orte aller zur Gruppe 135 gehörenden Datenspeicher 125 umfasst. Einschränkungen eines Teilgebiets davon werden auf alle Datenspeicher 125 der Gruppe 135 bezogen. Der durch die Gruppe 135 gebildete Datenspeicher 125 kann beispielsweise mehreren Ländern, Staaten oder Kontinenten zugeordnet sein.

Die Verarbeitungseinrichtung 105 versendet die Datei 170 über die zweite Schnittstelle 115 an den ausgewählten Datenspeicher 125 beziehungsweise die Gruppe 135 von Datenspeichern 125, die sie zuvor bestimmt hat, und legt im dritten Datenspeicher 160 einen Vermerk über die Zuordnung der Datei 170 zu dem ausgewählten Datenspeicher 125 ab. Diese Zuordnung 165 kann später benutzt werden, wenn auf die Datei 170 lesend oder schreibend zugegriffen werden soll, um den korrekten Datenspeicher 125 anzusprechen.

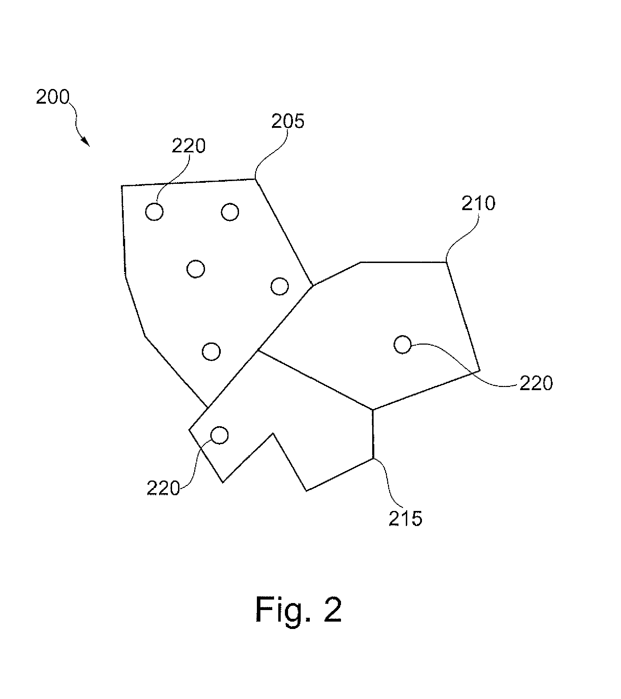

Figur 2 zeigt eine schematische Landkarte 200 mit einem ersten Gebiet 205, einem zweiten Gebiet 210 und einem dritten Gebiet 215, die paarweise aneinander angrenzen. Die Gebiete 205 bis 215 können beliebige geographische Gebiete sein, insbesondere Länder, Staaten oder Kontinente. Üblicherweise handelt es ich bei den Gebieten 205 bis 215 um solche, die unterschiedlicher Legislatur unterworfen sind, so dass bezüglich der Speicherung von Daten im Bereich des jeweiligen Gebiets 205 bis 215 vorbestimmte Regeln gelten, die voneinander abweichen können.

In jedem der Gebiete 205 bis 215 liegen einer oder mehrere geographische Orte 220, an denen jeweils ein Datenspeicher 125 physikalisch angeordnet ist. Im oben bezüglich Figur 1 dargelegten Beispiel könnte ein Verzeichniseintrag 155 angeben, dass ein bestimmter Datenspeicher 125 an einem geographischen Ort 220 aufgestellt ist, der zum ersten Gebiet 205 gehört. Im ersten Gebiet 205 könnte eine Legislatur bestehen, die einen Betreiber eines Datenspeichers 125 zur Herausgabe bestimmter Informationen an eine anfragende Regierungsstelle zwingt. Die Ablage einer Datei 170 eines vorbestimmten Datentyps 175 im ersten Gebiet 205 kann daher mittels einer Regel 145 im ersten Datenspeicher 140 des Speichersystems 100 von Figur 1 verboten sein.

Es kann auch aus anderen Gründen wünschenswert sein, den geographischen Aufenthaltsort von Daten beziehungsweise Dateien 170 auf Datenspeichern 125 zu steuern. Beispielsweise kann es wünschenswert sein, nicht zu viele Daten unterschiedlicher Datentypen 175 an nahe aneinander liegenden geographischen Orten 220 zu akkumulieren, um die Gefahr eines Datenverlusts beispielsweise im Fall einer Natur- oder Umweltkatastrophe, eines Versagens einer Infrastruktur oder eines ähnlichen Vorkommnisses zu minimieren.

Eine Regel 145 kann hierfür einen geographischen Mindestabstand zwischen zwei geographischen Orten 220 fordern, an denen Datenspeicher 125 aufgestellt sind, denen Daten vorbestimmter Datentypen 175 zugeordnet sind. Anhand der Verzeichniseinträge 155 im zweiten Datenspeicher 150 können die geographischen Orte 220 der betroffenen Datenspeicher 125 miteinander verglichen werden, um eine geographische Distanz zwischen den beiden Datenspeichern 125 zu bestimmen. In einer Ausführungsform kann der einzuhaltende Mindestabstand in Form eines Längenmaßes wie Meter oder Kilometer angegeben sein, in einer anderen Ausführungsform kann angegeben sein, dass eine Mindestanzahl Grenzübergänge zwischen aneinander angrenzenden Gebieten 205 bis 215 auf dem Weg zwischen den geographischen Orten 220 zweier betrachteter Datenspeicher 125 liegen muss.

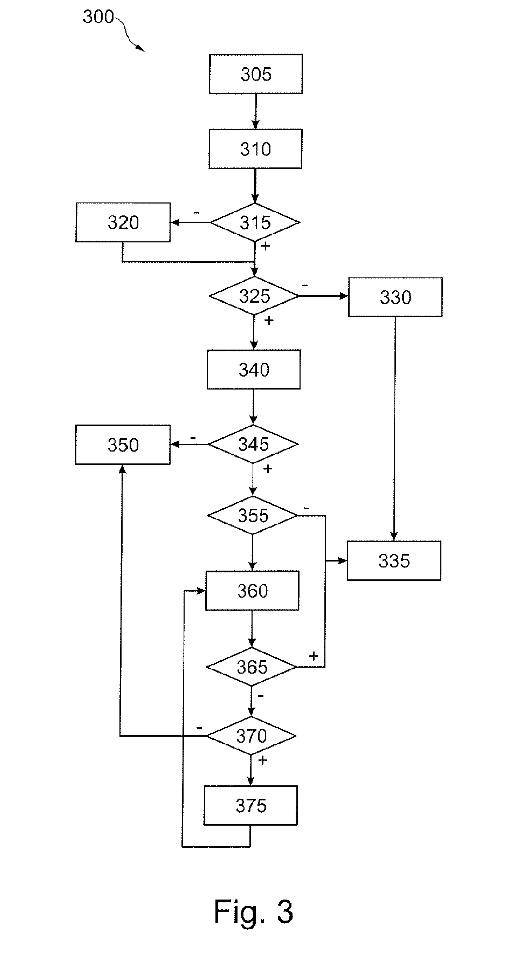

Figur 3 zeigt ein Ablaufdiagramm eines Verfahrens 300 zum Speichern von Daten, insbesondere einer Datei 170. Das Verfahren 300 ist insbesondere zur Ausführung auf dem Speichersystem 100 beziehungsweise der Verarbeitungseinrichtung 105 von Figur 1 geeignet. Dabei kann das Verfahren 300 als Computerprogrammprodukt implementiert sein.

In einem ersten Schritt 305 werden Daten entgegengenommen. Dieser Schritt kann insbesondere durch die Verarbeitungseinrichtung 105 durchgeführt werden, indem sie die Datei 170 über die erste Schnittstelle 110 entgegennimmt. In einigen Ausführungsformen ist es ausreichend, nur einen Teil der zu übermittelnden Daten entgegenzunehmen, beispielsweise Beschreibungsinformationen, einen Dateinamen, einen ersten Abschnitt der zu übermittelnden Daten oder einen Verweis auf die Daten, die an einer anderen Stelle zur Übertragung bereitstehen.

In einem nachfolgenden Schritt 310 wird der Datentyp 175 der entgegengenommenen bzw. referenzierten Daten bestimmt. In einer bevorzugten Ausführungsform bestimmt die Verarbeitungseinrichtung 105 den Datentyp 175 automatisch. Beispielsweise kann anhand eines Dateinamens bestimmbar sein, für welches Applikationsprogramm die fraglichen Daten geeignet sind, und aus dieser Information kann der Datentyp 175 ableitbar sein. In die Bestimmung des Datentyps 175 können auch weitere Informationen einfließen, beispielsweise Hinweisdaten, die eine Zugehörigkeit der Daten zu einem vorbestimmten Projekt, einer Abteilung, einem Bearbeiter oder einer anderen Organisationseinheit eines Unternehmens repräsentiert. Weitere Informationen können beispielsweise aus der Struktur, der Größe oder einem augenblicklichen Ablageort der Datei 170 entnommen werden.

In einem nachfolgenden Schritt 315 wird überprüft, ob der Datentyp 175 mit hinreichender Genauigkeit beziehungsweise Sicherheit bestimmt werden konnte. Ist dies nicht der Fall, so kann der Datentyp 175 von einem Benutzer erfragt werden, der die Abspeicherung der Datei 170 veranlasst hat. Diese Abfrage einer Benutzereingabe ist optional. Kann der Datentyp 175 mit oder ohne Rückfrage bei dem Benutzer nicht bestimmt werden, so kann die Abspeicherung der Daten zurückgewiesen werden (vgl. Schritt 350 unten).

Ist der Datentyp 175 bestimmt, so wird in einem Schritt 325 überprüft, ob bezüglich der Abspeicherung von Daten dieses Datentyps 175 Einschränkungen bestehen. Dazu können die Regeln 145 des ersten Datenspeichers 140 angewandt werden. Bestehen keine Einschränkungen, so kann in einem Schritt 330 ein beliebiger Datenspeicher 125 ausgewählt werden. Anschließend werden die Daten in einem Schritt 335 über die zweite Schnittstelle 115 an den ausgewählten Datenspeicher 125 übergeben.

Wird im Schritt 325 festgestellt, dass bezüglich des Datentyps 175 der zu speichernden Daten 170 Einschränkungen bestehen, so werden in einem Schritt 340 einer oder mehrere Datenspeicher 125 ausgewählt, die an einem geographischen Ort 220 installiert sind, der keinem Speicherverbot unterliegt. Zur Bildung dieser Auswahl werden vorzugsweise die Verzeichniseinträge 155 im zweiten Datenspeicher 150 herangezogen.

Anschließend wird in einem Schritt 345 überprüft, ob eine Auswahl gebildet werden konnte. Ist dies nicht der Fall, so können die Daten nicht unter Wahrung der Regeln 145 abgespeichert werden und die Speicherung wird in einem Schritt 350 verweigert.

Wurde eine Auswahl gefunden, so kann das Verfahren 300 zum Schritt 335 übergehen und die Daten an den ausgewählten Datenspeicher übergeben. Erforderlichenfalls kann im Schritt 330 noch aus einer Menge mehrerer ausgewählter Datenspeicher 125 einer ausgewählt werden.

Zusätzlich oder alternativ zu der beschriebenen Auswahl eines Datenspeichers 125 anhand seines geographischen Orts 220 und des Datentyps 175 der zu speichernden Daten 170 kann die Auswahl des Datenspeichers 125 auch anhand eines Mindestabstands eingeschränkt werden, der zwischen den geographischen Orten 220 von Datenspeichern 125 einzuhalten ist, die für die Speicherung von Daten 170 vorbestimmter Datentypen 175 vorgesehen sind. Im folgenden wird eine mögliche Implementation einer solchen optionalen Einschränkung erklärt. Andere Implementationen, insbesondere die Betrachtung des Abstands vor der Betrachtung des geographischen Orts, sind ebenfalls möglich.

In einem Schritt 355 wird überprüft, ob eine Abstandseinschränkung besteht. Dazu können wieder die Regeln 145 im ersten Datenspeicher 140 herangezogen werden. Besteht keine Abstandseinschränkung, so werden die Daten im Schritt 335 an den ausgewählten Datenspeicher 125 übergeben, wobei optional im Schritt 330 eine Auswahl eines Datenspeichers 125 aus einer Menge mehrerer möglicher Datenspeicher 125 durchgeführt werden kann.

Besteht jedoch eine Abstandseinschränkung, so wird in einem Schritt 360 für jeden Datenspeicher 125, der im Schritt 340 identifiziert werden konnte, ein Abstand zu einem Datenspeicher 125 bestimmt, der für die Speicherung von Daten 170 eines Datentyps 175 vorgesehen ist, zu denen die Daten des vorliegenden Datentyps 175 einen vorbestimmten Abstand einzuhalten haben. Anhand der Regeln 145 wird also zunächst überprüft, welche geographischen Orte 220 bzw. welche Gebiete 205 bis 215 einem einzuhaltenden Mindestabstand unterliegen, bevor anhand der Verzeichniseinträge 155 die Abstände der geographischen Orte 220 der betrachteten Datenspeicher 125 bestimmt werden. Die Abstände der geographischen Orte 220 können in Form einer Distanz oder in Form einer Anzahl Grenzübergänge zwischen benachbarten Gebieten 205-215 angegeben sein, über die die Daten 170 zum Datenspeicher 125 bzw. zur Gruppe 135 transportiert werden können.

In einem weiteren Schritt 365 wird für einen der in Schritt 340 bestimmten Datenspeicher 125 überprüft, ob die in Schritt 360 bestimmten Abstände ausreichend sind, um sämtliche Regeln 145 zu erfüllen. Sind die Abstände ausreichend, so kann das Verfahren 300 in den Schritt 335 übergehen, um die Daten 170 an den ausgewählten Datenspeicher 125 zu übergeben. Das Verfahren 300 kann jedoch auch weiterlaufen, um noch weitere Datenspeicher 125 zu identifizieren, die die Abstandseinschränkung erfüllen.

Sind die Abstände für den betrachteten Datenspeicher 125 nicht ausreichend, so wird der Datenspeicher 125 aus der Menge der in Schritt 340 bestimmten Datenspeicher 125 entfernt.

Anschließend wird in einem Schritt 370 bestimmt, ob die Menge noch weitere, unüberprüfte Datenspeicher 125 enthält. Ist dies nicht der Fall, so werden die Daten in Schritt 350 von der Speicherung zurückgewiesen. Bestehen noch unüberprüfte Datenspeicher 125, so erfolgt in Schritt 375 eine Neuwahl des betrachteten Datenspeichers 125. Anschließend kehrt das Verfahren in den Schritt 360 zurück, um die Abstände bezüglich dieses ausgewählten Datenspeichers 125 zu überprüfen, wie oben ausgeführt wurde.

Das Verfahren 300 endet entweder im Schritt 335 durch das Ausgeben der Daten an den ausgewählten Datenspeicher 125 oder im Schritt 350 durch Zurückweisen der zu speichernden Daten 170.

### Bezugszeichenliste

- 100: Speichersystem
- 105: Verarbeitungseinrichtung
- 110: erste Schnittstelle
- 115: zweite Schnittstelle
- 120: Rechner
- 125: Datenspeicher
- 130: dritte Schnittstelle
- 135: Gruppe (Cloud)
- 140: erster Datenspeicher
- 145: Regel
- 150: zweiter Datenspeicher
- 155: Verzeichnis-Eintrag
- 160: dritter Datenspeicher
- 165: Zuordnung Daten <-> Datenspeicher
- 170: Datei
- 175: Datentyp

- 200: Landkarte
- 205: erstes Gebiet
- 210: zweites Gebiet
- 215: drittes Gebiet
- 220: physikalischer Ort

- 300: Verfahren
- 305: Daten entgegen nehmen
- 310: Datentyp bestimmen
- 315: Datentyp bekannt?
- 320: Datentyp erfragen
- 325: Einschränkungen bei Speicherung bekannt?
- 330: beliebigen Datenspeicher auswählen
- 335: Ausgeben der Daten an ausgewählten Datenspeicher
- 340: Auswählen eines Datenspeicheres auf der Basis einer Orts- oder Gebietseinschränkung

- 345: passenden Datenspeicher gefunden?
- 350: Daten zurückweisen
- 355: Abstandseinschränkung?
- 360: Bestimmen Abstände
- 365: Abstände ausreichend?
- 370: Neuwahl möglich?
- 375: Neuwahl

## Patentansprüche

1. Speichersystem (100) mit folgenden Elementen:
- eine erste Schnittstelle (110) zur Entgegennahme von zu speichernden Daten (170);
- eine zweite Schnittstelle (115) zur Verbindung mit mehreren Datenspeichern (125), die sich an unterschiedlichen geographischen Orten (210) befinden;
- eine Verarbeitungseinrichtung (105), die dazu eingerichtet ist, einen der Datenspeicher (125) für die entgegen genommenen Daten (170) auszuwählen und die Daten (170) an den ausgewählten Datenspeicher (125) zu versenden;
**dadurch gekennzeichnet, dass**
- die Auswahl auf der Basis des Datentyps (175) der Daten (170) und eines geographischen Orts (220) des Datenspeichers (125) erfolgt.

2. Speichersystem (100) nach Anspruch 1, wobei die Zuordnung auf der Basis von Regeln (145) erfolgt, die einen Datentyp (175) einem geographischen Ort (220) zuordnen.

3. Speichersystem (100) nach Anspruch 1 oder 2, wobei die Zuordnung auf der Basis von Regeln (145) erfolgt, die einen geographischen Mindestabstand angeben, den zwei Datenspeicher (125) einzuhalten haben, die der Speicherung von Daten (170) unterschiedlicher vorbestimmter Datentypen (175) zugeordnet sind.

4. Speichersystem (100) nach einem der vorangehenden Ansprüche, ferner umfassend ein Verzeichnis (150) mit einer Zuordnung (155) von Datenspeichern (125) zu deren geographischen Orten (210).

5. Speichersystem (100) nach einem der vorangehenden Ansprüche, wobei mehrere Datenspeicher (125) zu einer Gruppe (135) zusammen gefasst sind und der geographische Ort (210) der Gruppe (135) durch ein Gebiet gegeben ist, das die geographischen Orte (210) aller Datenspeicher (125) der Gruppe (135) umfasst.

6. Speichersystem (100) nach einem der vorangehenden Ansprüche, wobei die Auswahl zusätzlich auf der Basis von Regeln (145) erfolgt, die den Verlauf einer Datenverbindung (115, 130) zum Datenspeicher (125) berücksichtigen.

7. Speichersystem (100) nach einem der vorangehenden Ansprüche, wobei der geographische Ort (210) eines Datenspeichers durch sein Aufstellungsland (205-215) gegeben ist.

8. Speicherverfahren (300), wobei das Verfahren folgende Schritte umfasst:
- Entgegennehmen (305) von zu speichernden Daten (170);
- Auswählen (340) eines Datenspeichers für die entgegen genommenen Daten (170) auf der Basis des Datentyps (175) der Daten (170) und eines geographischen Orts (210) des Datenspeichers (125); und
- Versenden (335) der Daten (170) an den ausgewählten Datenspeicher (125).

9. Speicherverfahren (300) nach Anspruch 8, ferner umfassend den Schritt des Bestimmens (310) des Datentyps (175) auf der Basis der entgegen genommenen Daten (170).

10. Speicherverfahren (300) nach einem der Ansprüche 8 oder 9, ferner umfassend folgende Schritte:
- Bestimmen (360) eines geographischen Abstands zwischen dem ausgewählten Datenspeicher (125) und einem Datenspeicher (125), der der Speicherung von Daten (170) eines anderen Datentyps (175) zugeordnet ist, und
- Auswählen (375) eines anderen Datenspeichers (125), falls der bestimmte Abstand geringer als ein vorbestimmter Abstand ist.

11. Speicherverfahren (300) nach einem der Ansprüche 8 bis 10, ferner umfassend das Bestimmen (320) des Datentyps (175) der entgegen genommenen Daten (170) auf der Basis einer Benutzereingabe, falls der Datentyp (175) der Daten (170) nicht ausreichend bestimmbar ist.

12. Computerprogrammprodukt mit Programmcodemitteln zur Durchführung eines Speicherverfahrens (300) nach einem der Ansprüche 8 bis 11, wenn das Computerprogrammprodukt auf einer Verarbeitungseinrichtung (105) ausgeführt wird oder auf einem computerlesbaren Datenträger abgespeichert ist.
